# EUROPEAN PATENT APPLICATION

(11) **EP 2 023 513 A2**
(43) Date of publication of application: **11.02.2009**
(21) Application number: 08103120.5
(22) Date of filing: 28.03.2008
(51) Int. Cl.: H04H 60/82

(54) **Broadcast receiver**

(30) Priority: 25.07.2007 KR 20070074616
(71) Applicant: Samsung Electronics Co., Ltd., Seoul 442-742 (KR)
(72) Inventor: Chung, Ji-min, 811-904, Byeokjeokgol, 8 danji apt., Gyeonggi-do (KR)
(74) Representative: Hewett, Jonathan Michael Richard

(57) **Abstract**

A broadcast receiving apparatus and a control method thereof are provided. According to the control method of the broadcast receiving apparatus, the broadcast receiving apparatus collects updated information from a network, and generates a display screen based on a comparison of the collected information with keywords or sentences input by a user. Therefore, a user may be informed whether desired information is registered on the network.

## Description

The present invention relates to a broadcast receiver and particularly, but not exclusively, to a method of controlling a broadcast receiver to search for information desired by a user from among information received from an external source.

Televisions (TVs) are representative of broadcast receiving apparatuses. Since the advent of Internet protocol televisions (IPTVs), TVs have begun to provide viewers with various additional functions via networks in addition to displaying broadcast programs.

An Internet protocol television (IPTV) is a system wherein information services, moving picture contents, broadcasts or other services are provided to TV receivers via a high speed Internet connection. IPTVs are a form of digital convergence, as they involve integration of the Internet and TVs. Additionally, IPTVs employ TV receivers and remote controllers instead of computer monitors and mice, respectively, so IPTVs are distinct from conventional Internet TVs.

In order to use IPTVs, only TV receivers, set-top boxes and Internet lines need to be connected. In other words, if a set-top box or a leased modem is connected to the IPTV, and if power is then supplied to the IPTV just as a TV is turned on, a user may use the IPTV. Accordingly, it is also easy for users unfamiliar with computers not only to search the Internet using a remote controller, but also to be provided with various kinds of content and additional services, such as movies, home shopping, home banking, on-line games, mp3s or the like, via the Internet.

Although users are provided with a variety of information using IPTVs, the users need to individually find various source sites using remote controllers in order to acquire desired information, and user inconvenience is thus increased.

Additionally, if a user does not search for a particular source site even when the desired information has been updated on the source site, it is impossible for the user to know whether the desired information is registered. Therefore, users may miss the desired information.

As a result, such integration of display apparatuses and networks has brought a diversification of information sources that can be searched from TVs, and thus there is a need for a method to search for and provide information desired by a user.

An embodiment of the present invention provides a broadcast receiving apparatus and a control method thereof, in which the broadcast receiving apparatus receives updated information from an external source site and stores the received information in order to provide a user with information corresponding to keywords and sentences input by the user, thereby increasing user convenience.

According to an aspect of the present invention, there is provided a control method of a broadcast receiving apparatus, the method comprising receiving information from a network, receiving keywords input by a user, and extracting information including the keywords from the received information.

The receiving information may comprise receiving updated information from one or more sources.

The method may further comprise receiving addresses for sources entered by the user. The receiving information may comprise receiving Really Simple Syndication (RSS) information from the sources corresponding to the entered addresses using an RSS protocol.

The method may further comprise displaying the extracted information.

The method may further comprise transmitting the extracted information using a short message service (SMS).

The network may be the Internet, and the broadcast receiving apparatus may function as a web client with respect to a web server which provides the information.

The addresses for the sources may be addresses for electronic commerce sites, and the input keywords may represent the name of a kind of goods.

According to another aspect of the present invention, there is provided a control method of a broadcast receiving apparatus, the method comprising receiving information from a network; receiving a sentence input by a user; and extracting a portion of the received information using the input sentence.

The operation of receiving information may comprise receiving updated information from one or more sources.

The method may further comprise receiving addresses for sources entered by the user. The receiving information may comprise receiving Really Simple Syndication (RSS) information from the sources corresponding to the entered addresses using an RSS protocol.

The sentence input by the user may comprise keywords and an operator.

The sentence input by the user may comprise a natural language.

The operation of extracting may comprise calculating the similarity between the received information and sentence.

The method may further comprise displaying the extracted information in the order of the calculated similarity.

The operation of displaying may be performed only when the similarity is greater than a predetermined value.

The network may be the Internet, and the broadcast receiving apparatus may function as a web client with respect to a web server which provides the information.

According to another aspect of the present invention, there is provided a broadcast receiving apparatus comprising an interface unit which receives information from a network, an input unit which receives keywords input by a user, and a controller which extracts information including the keywords from the received information.

The interface unit may receive updated information from one or more sources.

The input unit may also receive addresses for sources entered by the user, and the interface unit may receive Really Simple Syndication (RSS) information from the sources corresponding to the entered addresses using an RSS protocol.

The broadcast receiving apparatus may further comprise a display information generator which displays the extracted information.

The interface unit transmits the extracted information to a short message service (SMS) server.

According to another aspect of the present invention, there is provided a program for performing receiving information from a network, receiving keywords input by a user; and extracting information including the keywords from the received information.

The above and/or other aspects of the present invention will be more apparent by describing certain embodiments of the present invention with reference to the accompanying drawings, in which:
Figure 1 is a block diagram of an RSS system to which the present invention is applicable;
Figure 2 is a detailed block diagram of an IPTV shown in Figure 1;
Figure 3 is a flowchart explaining a control method of a broadcast receiving apparatus according to a first embodiment of the present invention;
Figure 4 is a flowchart explaining a control method of a broadcast receiving apparatus according to a second embodiment of the present invention;
Figure 5 is a diagram showing an example of a screen when data is displayed during the processes shown in Figures 3 and 4;
Figure 6 is a flowchart explaining a control method of a broadcast receiving apparatus according to a third embodiment of the present invention;
Figure 7 is a flowchart explaining a control method of a broadcast receiving apparatus according to the third embodiment of the present invention;
Figure 8 is a block diagram of a broadcast receiving apparatus according to a fourth embodiment of the present invention; and
Figure 9 is a flowchart explaining a control method of a broadcast receiving apparatus according to the fourth embodiment of the present invention.

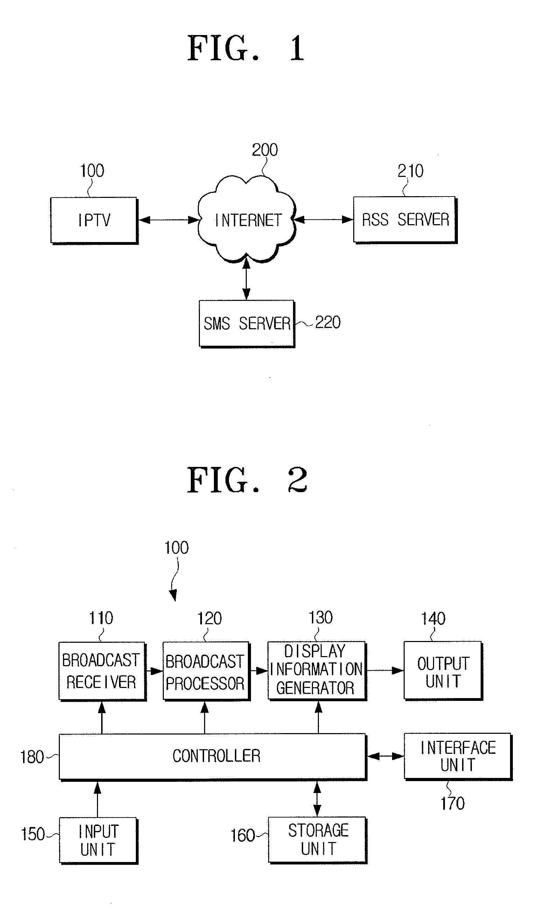

Figure 1 is a block diagram of a Really Simple Syndication (RSS) system to which the present invention is applicable. The RSS system of Figure 1 is configured by connecting an Internet protocol television (IPTV) 100, an RSS server 210 and a short message service (SMS) server 220 via the Internet 200 to enable mutual communication therebetween.

The IPTV 100 is one kind of a broadcast receiving apparatus which receives a broadcast program and provides a user with the received broadcast program. The IPTV 100 requests and receives RSS information from the RSS server 210 via the Internet 200. The IPTV 100 then provides the user with the received RSS information using a screen. In addition, the IPTV 100 requests that the SMS server 220 send a message via the Internet 200, so that it is possible to send a text message to a mobile phone.

Since the IPTV 100 requests the RSS information from the RSS server 210 via the Internet 200, the IPTV 100 may function as a web client. Alternatively, as the RSS server 210 transmits the RSS information to the IPTV 100 via the Internet 200, the RSS server 210 may function as a web server.

The IPTV 100 may periodically or non-periodically receive the RSS information. In this situation, if it is determined that received RSS information is updated information, the IPTV 100 may display on a screen a message notifying that the RSS information has been updated.

Hereinafter, the IPTV 100 of Figure 1 will be described in detail with reference to Figure 2. Figure 2 is a detailed block diagram showing the IPTV 100 shown in Figure 1.

In Figure 2, the IPTV 100 comprises a broadcast receiver 110, a broadcast processor 120, a display information generator 130, an output unit 140, an input unit 150, a storage unit 160, an interface unit 170 and a controller 180.

The broadcast signal receiver 110 tunes to a broadcast received by radio, and demodulates the tuned broadcast.

The broadcast processor 120 performs signal processing with respect to the broadcast signal output from the broadcast signal receiver 110. The broadcast signal processed by the broadcast processor 120 is transferred to the display information generator 130, and is then added to video to be shown on a display.

The display information generator 130 processes the video to be added to the broadcast signal under the control of the controller 180 according to a process described in detail below.

The output unit 140 outputs the broadcast signal output from the broadcast signal receiver 110 and broadcast signal output from the display information generator 130, and provides a user with the output broadcast signals. Specifically, the processed broadcast signal may be output to the display or to an external display (for example, an external TV) which is connected to an external output terminal.

The input unit 150 transfers user commands received from a remote controller to the controller 180. The controller 180 controls the entire operation of the IPTV 100 in response to the user commands received from the input unit 150.

The storage unit 160 stores a program, data and information which are required when the controller 180 controls the operations of the IPTV 100.

The interface unit 170 is connected to the RSS server 210 via the Internet 200 so that mutual communication may be performed therebetween.

The controller 180 controls the broadcast receiver 110, broadcast processor 120 and display information generator 130 so that a broadcast is received in response to the user commands and is displayed on the screen.

The controller 180 requests and receives the RSS information from the RSS server 210 via the interface unit 170, and stores the received information in the storage unit 160. In order to request the RSS information from the RSS server 210 via the Internet 200, the controller 180 may function as a web client.

The controller 180 compares the currently received RSS information stored in the storage unit 160 with previously received RSS information that is already stored in the storage unit 160. If it is determined that the currently received RSS information differs from the previously received RSS information, the controller 180 may determine the currently received RSS information to be updated information. In particular, the controller 180 may determine whether the updated information contains keywords that a user has entered via the input unit 150, and as a result, if it is determined that the updated information contains the keywords, the controller 180 may inform the user thereof. Specifically, the controller 180 may control the display information generator 130 so that a message that the currently received RSS information has been updated may be generated and provided to the user using the screen.

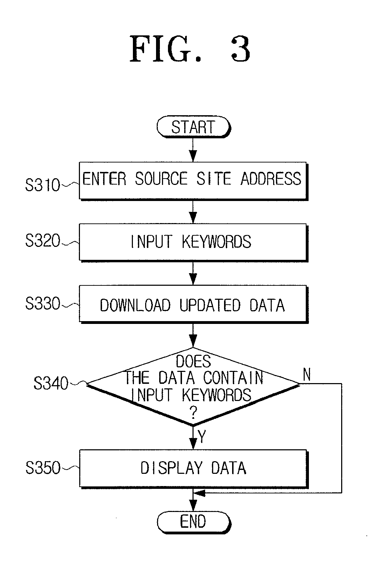

Hereinafter, a process by which the controller 180 detects requestable information from the RSS information and informs a user of the detected information when the RSS information has been updated will be described in detail with reference to Figure 3.

Figure 3 is a flowchart explaining a control method of a broadcast receiving apparatus according to a first embodiment of the present invention. In this embodiment of the present invention, it is assumed that a user desires to buy a used liquid crystal display (LCD) TV.

As shown in Figure 3, the user enters Web site addresses from which the user wishes to collect information (S310). For example, the user may enter Web site addresses for companies A, B and C, which mainly deal with secondhand goods.

The user then inputs "LCD TV" as keywords corresponding to goods which he wishes to buy (S320).

Subsequently, the controller 180 downloads updated data from each site using an RSS reader, and stores the downloaded data in the storage unit 160 (S330). Accordingly, the latest content of source sites may be downloaded using the RSS reader even if the user does not individually visit the entered sites in operation S310. The RSS reader may automatically collect and display RSS information while visiting the entered sites. Here, the RSS is a format in Extensible Markup Language (XML) by which Web sites may receive and transmit data. An RSS file formed according to the RSS standard contains information pertaining to a predetermined site. Therefore, the controller may read only the RSS file, and it is thus possible to know the latest updated content without needing to visit the corresponding site.

The controller 180 then reads the RSS information collected as described above from the storage unit 160, and extracts data including the keywords, such as "LCD TV", input in operation S320 from the read RSS information (S340).

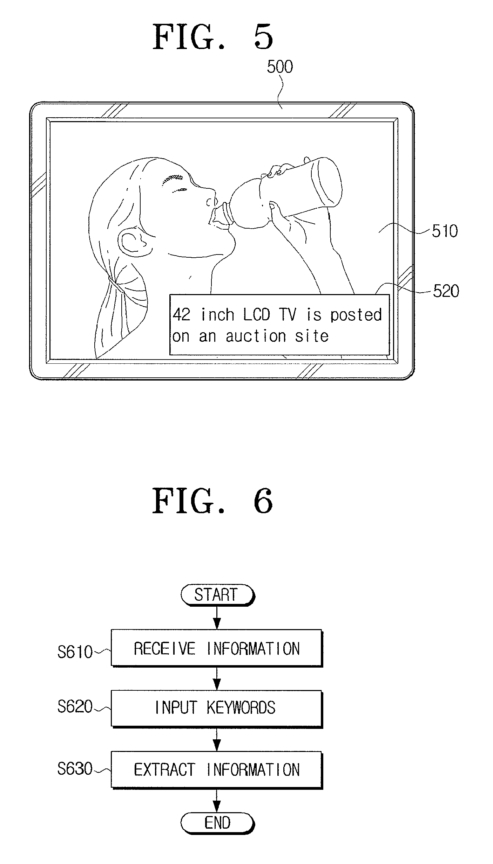

If data contains keywords "LCD TV", the controller 180 may control the display information generator 130 so that the data containing the keywords may be displayed on the screen, for example in a picture-in-picture (PIP) form (S350). This PIP form is shown in Figure 5.

As shown in Figure 5, the user may simultaneously view on a TV 500 a broadcast screen 510 and a message 520, which notifies that the goods which he desires to buy, namely, a LCD TV, is posted on an auction site. Instead of displaying the message 520 on the TV 500, the controller 180 may transmit the message 520 to the SMS server 220 via the interface unit 170, and may also send the message 520 to a user's mobile phone as a text message.

Referring back to Figure 3, the user may also input a combination of keywords and operators. For example, if the user inputs "42 Inch + (display*LCD) + (TV*television)" in operation S320, the controller 180 may extract all data containing one of the following four phrases: "42 Inch display TV", "42 Inch LCD TV", "42 Inch display television" and "42 Inch LCD television".

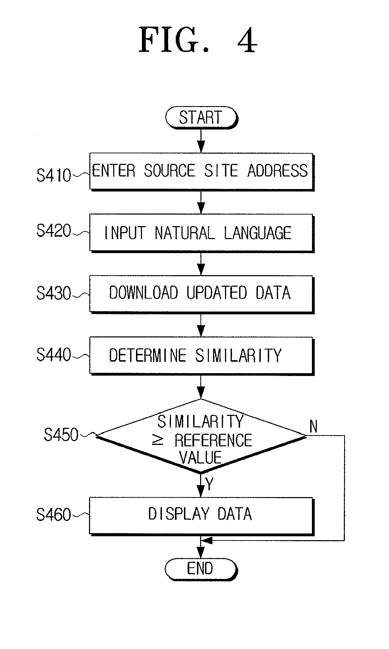

Figure 4 is a flowchart explaining a control method of a broadcast receiving apparatus according to a second embodiment of the present invention. In the same manner as in operation S310 of Figure 3, the user enters Web site addresses from which he wishes to collect information (S410). The user may then input keywords corresponding to goods which he wishes to buy using a natural language (S420), in a different manner as in operation S320 of Figure 3.

The natural language is a language for general-purpose communication. For example, the user may input a sentence "Where is a shop that sells TVs with LCD panels?" in a commonly used form, instead of inputting keywords, such as "LCD TV", or inputting a combination of keywords and operators, such as "LCD + TV".

Next, in the same manner as in operation S330 of Figure 3, the controller 180 downloads updated content data from each site using the RSS reader, and stores the downloaded data in the storage unit 160 (S430).

The controller 180 then reads the RSS information collected as described above from the storage unit 160, and determines the similarity between the read RSS information and the natural language input in operation S420 from the read RSS information (S440). In more detail, the controller 180 extracts useful terms from the natural language using a morpheme analyzer which is used in Internet search engines, and then determines the similarity based on correlations between the extracted terms and the data downloaded in operation S430.

If it is determined that data is greater than a set reference value, excluding data with a very low similarity (S450-Y), the controller 180 may control the display information generator 130 to display the data on the screen, for example in a PIP form (S460), as shown in Figure 5. Additionally, as described above in Figure 3, the controller 180 may transmit the message 520 to the SMS server 220 via the interface unit 170, and the SMS server 220 may also send the message 520 to the user's mobile phone as a text message.

The process by which the IPTV 100 provides the user with the information including the predetermined keywords using the RSS reader was described above in detail, according to an embodiment of the present invention.

Although the RSS information is downloaded using the RSS protocol in this embodiment of the present invention, the present invention may be applied to a situation in which a variety of information is provided using protocols other than the RSS protocol.

Additionally, even though the extracted data is displayed in the PIP form in this embodiment of the present invention, the data may be output using various fashions other than the PIP form.

Furthermore, the IPTV 100 is connected to the RSS server 210 via the Internet 200 in this embodiment of the present invention. However, the IPTV 100, RSS server 210 and SMS server 220 may be connected through any medium, and accordingly embodiments of the present invention may be applied to situations in which the IPTV 100, RSS server 210 and SMS server 220 are connected via other networks, for example a local area network (LAN), instead of the Internet 200.

Moreover, shopping sites are searched in this embodiment of the present invention, but it is possible to search for various source sites which are frequently updated, for example sites which provide news, stock market information and weather reports, or blog sites.

Although the broadcast receiving apparatus to which the present invention is applicable is the IPTV 100 in embodiments of the present invention in order to facilitate understanding of the present invention, embodiments of the present invention are applicable to other broadcast receiving apparatuses instead of the IPTV 100. Besides the IPTV 100, broadcast receiving apparatuses may include a set-top box (STB) or a digital multimedia broadcasting (DMB) receiving apparatus, or may be any of various portable devices, such as a mobile phone, a navigation device or a personal multimedia player (PMP), having a broadcast receiving function.

Hereinafter, third and fourth embodiments of the present invention will be described in detail with reference to Figures 6, 7, 8 and 9.

Referring to a control method of a broadcast receiving apparatus shown in Figure 6, the broadcast receiving apparatus receives information from a network (S610). The broadcast receiving apparatus receives keywords input by a user (S620), and then extracts information including the keywords from the received information (S630).

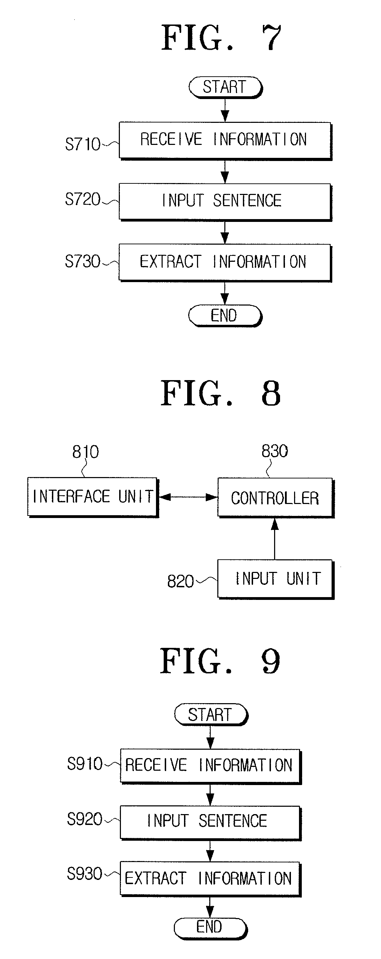

Referring to a control method of a broadcast receiving apparatus shown in Figure 7, the broadcast receiving apparatus receives information from a network (S710). The broadcast receiving apparatus receives a sentence input by a user (S720), and then extracts a portion of the received information using the input sentence (S730).

Figure 8 is a block diagram of a broadcast receiving apparatus according to a fourth embodiment of the present invention. The broadcast receiving apparatus of Figure 8 comprises an interface unit 810, an input unit 820 and a controller 830. The interface unit 810 receives information from a network, and the input unit 820 receives keywords input by a user. The controller 830 extracts information including the keywords from the received information.

Referring to Figure 9, a recording medium according to the fourth embodiment of the present invention receives information from a network (S910). The recording medium receives keywords input by a user (S920), and then extracts information including the keywords from the received information (S930).

Therefore, it is possible to extract and display information desired by the user.

As described above, according to embodiments of the present invention, a broadcast receiving apparatus receives updated information from external source sites and stores the received information, so that a user may acquire information corresponding to keywords or a sentence input by the user. Accordingly, the user does not need to individually search for information, so it is possible to enhance user convenience when searching for information.

The embodiments of the present invention can be written as computer programs and can be implemented in general-use digital computers that execute the programs using a computer readable recording medium and other types of transmission media. Examples of the computer readable recording medium include magnetic storage media (e.g., ROM, floppy disks, hard disks, etc.), and optical recording media (e.g., CD-ROMs, or DVDs). Other types of transmission media can include carrier waves (e.g., transmission through the Internet).

The present teaching can be readily applied to other types of apparatuses and many alternatives, modifications, and variations which fall within the scope of the present invention, will be apparent to those skilled in the art.

## Claims

1. A method of controlling a broadcast receiver, the method comprising:
receiving first information from a network;
receiving second information input by a user; and
extracting third information including at least a portion of the second information from the received first information.

2. The method as claimed in claim 1, wherein the receiving the first information comprises receiving updated information from one or more sources.

3. The method as claimed in claim 1 or claim 2, further comprising:
receiving addresses for sources, said addresses being entered by the user,
wherein the receiving the first information comprises receiving Really Simple Syndication RSS information from the sources corresponding to the entered addresses using an RSS protocol.

4. The method as claimed in claim 3 in which the addresses for the sources are addresses for electronic commerce sites.

5. The method according to claim 4 in which the second information represents a name of a kind of goods.

6. The method as claimed in any one of the preceding claims, further comprising:
displaying the extracted third information.

7. The method as claimed in any one of claims 1 to 4, further comprising:
transmitting the extracted third information using a short message service (SMS).

8. The method as claimed in any one of the preceding claims, wherein the network is the Internet, and the broadcast receiver operates as a web client with respect to a web server which provides the first information.

9. The method according to any one of claims 1 to 8 in which the second information contains one or more keywords.

10. The method according to any one of claims 1 to 8 in which the second information contains a sentence.

11. The method as claimed in claim 10, wherein the sentence input by the user comprises at least one of keywords and an operator.

12. The method as claimed in claim 10, wherein the sentence input by the user comprises a natural language.

13. The method as claimed in claim 10 to 12, wherein the extracting comprises calculating the similarity between the received information and the sentence.

14. The method as claimed in claim 13, further comprisingdisplaying the extracted third information in an order of the calculated similarity.

15. The method as claimed in claim 14, wherein the displaying is performed only when the similarity is greater than a predetermined value.

16. A computer program which, when executed by a processor, is arranged to perform the method of any one of claims 1 to 15.

17. A broadcast receiver comprising:
an interface unit arranged to receive first information from a network;
an input unit which arranged to receive second information input by a user; and
a controller arranged to extract third information containing at least a portion of the received second information, from the first information.

18. The receiver as claimed in claim 17, wherein the interface unit is arranged to receive updated information from one or more sources.

19. The receiver as claimed in claim 17 or 18, wherein the controller receives addresses for sources, the addresses being entered by the user, and
the interface unit is arranged to receive Really Simple Syndication RSS information from the sources corresponding to the entered addresses using an RSS protocol.

20. The receiver as claimed in claim 19, wherein the addresses for the sources are addresses for electronic commerce sites.

21. The receiver as claimed in any one of claims 17 to 20, wherein the controller is arranged to display the extracted third information.

22. The receiver as claimed in any one of claims 17 to 20, wherein the controller is arranged to transmit the extracted third information using a short message service (SMS).

23. The receiver as claimed in any one of claims 17 to 22, wherein the network is the Internet, and the broadcast receiver operates as a web client with respect to a web server which provides the first information.

24. The receiver according to any one of claims 17 to 23 in which the second information contains one or more keywords.

25. The receiver according to claim 24 in which the keywords represent a name of a kind of goods.

26. The receiver according to any one of claims 17 to 23 in which second information contains a sentence.
